# FASCICULE DE BREVET EUROPEEN

(11) **EP 3 421 293 B1**
(45) Date de publication et mention de la délivrance du brevet: **23.06.2021**
(21) Numéro de dépôt: 18180521.9
(22) Date de dépôt: 28.06.2018
(51) Int. Cl.: B60N 2/865, B60N 2/888, B60N 2/02

(54) **APPUI-TÊTE DE SIÈGE DE VÉHICULE AUTOMOBILE**
KOPFSTÜTZE FÜR KRAFTFAHRZEUGSITZ
HEADREST FOR A MOTOR VEHICLE SEAT

(30) Priorité: 29.06.2017 FR 1756003
(43) Date de publication de la demande: 02.01.2019
(73) Titulaire: TESCA France, 75008 Paris (FR)
(72) Inventeur: GEORGES, Laurent, 75008 Paris (FR)
(74) Mandataire: Sayettat, Julien Christian

(56) Documents cités:
- EP-A1- 2 698 277
- WO-A1-2016/080763
- US-A1- 2013 229 042
- US-A1- 2017 088 025

## Description

L'invention concerne un appui-tête de siège de véhicule automobile.

Il est connu, notamment du document US20130229042-A1, de réaliser un appui-tête de siège de véhicule automobile, ledit appui-tête comprenant :
- une armature métallique de liaison au dossier dudit siège,
- un boitier en matériau plastique moulé d'absorption d'énergie en cas de choc de la tête d'un passager sur ledit appui-tête, ledit boitier étant associé à ladite armature de manière fixe selon une direction longitudinale,
- une partie mobile montée à l'avant dudit boitier de manière à pouvoir se déplacer longitudinalement, ladite partie étant pourvue d'une paroi avant de réception d'un coussin d'appui-tête,
- un dispositif de réglage de la position longitudinale de ladite partie par rapport audit boitier, de manière à permettre un réglage longitudinal dudit coussin, ledit dispositif comprenant :
   o un moteur électrique monté solidairement à la dite partie mobile
   ∘ une tige filetée s'étendant longitudinalement, ladite tige étant montée en rotation dans ledit boitier en coopération avec ledit moteur de manière être mise en rotation dans un sens ou dans l'autre par actionnement dudit moteur dans un sens ou dans l'autre,
   ∘ un moyen de réception de ladite tige au travers d'un orifice fileté prévu dans ledit moyen, ledit moyen étant fixé en arrière de ladite paroi en décalage vers l'arrière par rapport à ladite paroi selon une distance sensiblement égale à la longueur de ladite tige.

L'invention a pour but d'améliorer l'appui-tête.

A cet effet, l'invention propose un appui-tête de siège de véhicule automobile, ledit appui-tête comprenant :
- une armature métallique de liaison au dossier dudit siège,
- un boitier en matériau plastique moulé d'absorption d'énergie en cas de choc de la tête d'un passager sur ledit appui-tête, ledit boitier étant associé à ladite armature de manière fixe selon une direction longitudinale,
- une partie mobile montée à l'avant dudit boitier de manière à pouvoir se déplacer longitudinalement, ladite partie étant pourvue d'une paroi avant de réception d'un coussin d'appui-tête,
- un dispositif de réglage de la position longitudinale de ladite partie par rapport audit boitier, de manière à permettre un réglage longitudinal dudit coussin, ledit dispositif comprenant :
   ∘ un moteur électrique monté solidairement audit boitier,
   ∘ une tige filetée s'étendant longitudinalement, ladite tige étant montée en rotation dans ledit boitier en coopération avec ledit moteur de manière être mise en rotation dans un sens ou dans l'autre par actionnement dudit moteur dans un sens ou dans l'autre,
   ∘ un moyen de réception de ladite tige au travers d'un orifice fileté prévu dans ledit moyen, ledit moyen étant fixé en arrière de ladite paroi par l'intermédiaire d'un organe d'écartement le décalant vers l'arrière par rapport à ladite paroi selon une distance sensiblement égale à la longueur de ladite tige,
ledit moteur étant disposé latéralement par rapport à ladite tige, de manière à ne sensiblement pas s'étendre en avant ni en arrière de ladite tige.

Dans cette description, les termes de positionnement dans l'espace (latéral, longitudinal, transversal, avant, arrière, horizontal,...) sont pris en référence à un appui-tête monté dans le véhicule en situation d'utilisation.

Avec un tel agencement, le positionnement du moteur latéralement par rapport à la tige filetée permet de minimiser la dimension longitudinale de l'appui-tête.

D'autres particularités et avantages de l'invention apparaîtront dans la description qui suit, faite en référence aux figures jointes, dans lesquelles :

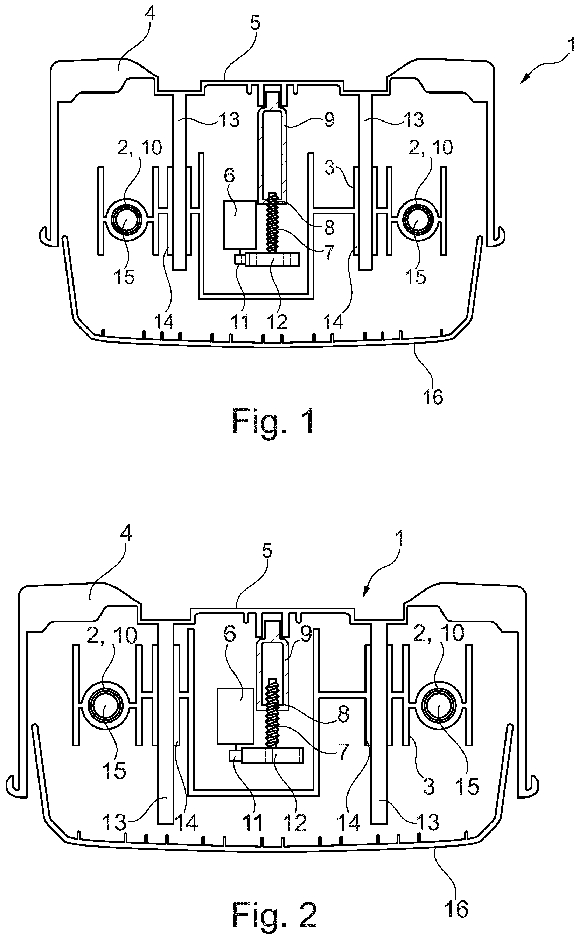

- la figure 1 est une vue schématique en coupe horizontale d'un appui-tête selon une réalisation, la partie mobile étant réglée en position maxi-avant,
- la figure 2 est analogue à la figure 1, la partie mobile étant réglée en position intermédiaire.

En référence aux figures, on décrit un appui-tête 1 de siège de véhicule automobile, ledit appui-tête comprenant :
- une armature 2 métallique de liaison au dossier dudit siège,
- un boitier 3 en matériau plastique moulé d'absorption d'énergie en cas de choc de la tête d'un passager sur ledit appui-tête, ledit boitier étant associé à ladite armature de manière fixe selon une direction longitudinale,
- une partie mobile 4 montée à l'avant dudit boitier de manière à pouvoir se déplacer longitudinalement, ladite partie étant pourvue d'une paroi avant 5 de réception d'un coussin d'appui-tête,
- un dispositif de réglage de la position longitudinale de ladite partie par rapport audit boitier, de manière à permettre un réglage longitudinal dudit coussin, ledit dispositif comprenant :
   ∘ un moteur électrique 6 monté solidairement audit boitier,
   ∘ une tige filetée 7 - par exemple en métal ou en matériau plastique moulé - s'étendant longitudinalement, ladite tige étant montée en rotation dans ledit boitier en coopération avec ledit moteur de manière être mise en rotation dans un sens ou dans l'autre par actionnement dudit moteur dans un sens ou dans l'autre,
   ∘ un moyen de réception 8 de ladite tige au travers d'un orifice fileté prévu dans ledit moyen, ledit moyen étant fixé en arrière de ladite paroi par l'intermédiaire d'un organe d'écartement 9 le décalant vers l'arrière par rapport à ladite paroi selon une distance sensiblement égale à la longueur de ladite tige,
ledit moteur étant disposé latéralement par rapport à ladite tige, de manière à ne sensiblement pas s'étendre en avant ni en arrière de ladite tige.

Selon la réalisation représentée, l'armature 2 définit deux branches 10 parallèles, le moteur 6 et la tige 7 étant disposés entre lesdites branches, ce qui permet de minimiser l'étendue longitudinale de l'appui-tête 1.

En particulier, l'armature 2 peut être en forme générale de U renversé, étant notamment à base de tube métallique replié, ledit tube étant en une ou en plusieurs parties associées les unes aux autres, notamment par emboitement.

Selon la réalisation représentée, le moteur 6 est pourvu d'une première roue dentée 11 engrenant, directement - ou indirectement par l'intermédiaire d'un dispositif de démultiplication en réalisation non représentée -, avec une deuxième roue dentée 12 montée en extrémité arrière de la tige filetée 7.

Selon la réalisation représentée, la partie mobile 4 comprend deux broches de guidage 13 coulissant dans deux gaines 14 respectives solidaires du boitier 3.

Selon la réalisation représentée, l'organe 9 est une pièce rapportée, notamment par emboitement, sur la partie mobile 4.

Selon une réalisation non représentée, l'organe 9 est agencé pour pouvoir se déformer plastiquement en compression en cas de choc violent appliqué par la tête d'un passager sur la paroi 5, de manière à permettre une absorption d'énergie additionnelle à celle apportée par le boitier 3, en particulier quand la partie mobile 4 n'est pas disposée en position maxi-arrière.

Par exemple, il peut être prévu, de façon non représentée, que l'organe 9 soit pourvu d'amorces de rupture ou de pliage.

Selon la réalisation représentée, l'organe 9 est en forme générale de conduit - notamment une forme générale de cylindre creux - de réception de la tige filetée 7.

Selon une réalisation, l'organe 9 est à base de matériau plastique moulé.

Selon la réalisation représentée, le boitier 3 comprend deux conduits 15 de réception des branches 10 en coulissement, de manière à permettre un réglage en hauteur du coussin.

De façon non représentée, le boitier 3 peut être pourvu de paliers de guidage en coulissement des branches 10 au travers d'orifices prévus dans lesdits paliers.

Selon la réalisation représentée, l'appui-tête 1 comprend en outre une coque arrière 16 de masquage du boitier 3.

## Revendications

1. Appui-tête (1) de siège de véhicule automobile, ledit appui-tête comprenant :
• une armature (2) métallique de liaison au dossier dudit siège,
• un boitier (3) en matériau plastique moulé d'absorption d'énergie en cas de choc de la tête d'un passager sur ledit appui-tête, ledit boitier étant associé à ladite armature de manière fixe selon une direction longitudinale,
• une partie mobile (4) montée à l'avant dudit boitier de manière à pouvoir se déplacer longitudinalement, ladite partie étant pourvue d'une paroi avant (5) de réception d'un coussin d'appui-tête,
• un dispositif de réglage de la position longitudinale de ladite partie par rapport audit boitier, de manière à permettre un réglage longitudinal dudit coussin, ledit dispositif comprenant :
∘ un moteur électrique (6) monté solidairement audit boitier,
∘ une tige filetée (7) s'étendant longitudinalement, ladite tige étant montée en rotation dans ledit boitier en coopération avec ledit moteur de manière à être mise en rotation dans un sens ou dans l'autre par actionnement dudit moteur dans un sens ou dans l'autre,
∘ un moyen de réception (8) de ladite tige au travers d'un orifice fileté prévu dans ledit moyen, ledit moyen étant fixé en arrière de ladite paroi par l'intermédiaire d'un organe d'écartement (9) le décalant vers l'arrière par rapport à ladite paroi selon une distance sensiblement égale à la longueur de ladite tige,
ledit appui-tête étant **caractérisé en ce que** ledit moteur est disposé latéralement par rapport à ladite tige, de manière à ne sensiblement pas s'étendre en avant ni en arrière de ladite tige.

2. Appui-tête selon la revendication 1, **caractérisé en ce que** l'armature (2) définit deux branches (10) parallèles, le moteur (6) et la tige (7) étant disposés entre lesdites branches.

3. Appui-tête selon l'une des revendications 1 ou 2, **caractérisé en ce que** le moteur (6) est pourvu d'une première roue dentée (11) engrenant, directement ou indirectement par l'intermédiaire d'un dispositif de démultiplication, avec une deuxième roue dentée (12) montée en extrémité arrière de la tige filetée (7).

4. Appui-tête selon l'une quelconque des revendications 1 à 3, **caractérisé en ce que** la partie mobile (4) comprend deux broches de guidage (13) coulissant dans deux gaines (14) respectives solidaires du boitier (3).

5. Appui-tête selon l'une quelconque des revendications 1 à 4, **caractérisé en ce que** l'organe (9) est une pièce rapportée sur la partie mobile (4).

6. Appui-tête selon l'une quelconque des revendications 1 à 5, **caractérisé en ce que** l'organe (9) est agencé pour pouvoir se déformer plastiquement en compression en cas de choc violent appliqué par la tête d'un passager sur la paroi (5), de manière à permettre une absorption d'énergie additionnelle à celle apportée par le boitier (3).

7. Appui-tête selon l'une quelconque des revendications 1 à 6, **caractérisé en ce que** l'organe (9) est en forme générale de conduit de réception de la tige filetée (7).

8. Appui-tête selon l'une quelconque des revendications 2 à 7, **caractérisé en ce que** le boitier (3) comprend deux conduits (15) de réception des branches (10) en coulissement.

9. Appui-tête selon l'une quelconque des revendications 1 à 8, **caractérisé en ce qu'**il comprend en outre une coque arrière (16) de masquage du boitier (3).

## Patentansprüche

1. Kopfstütze (1) für einen Kraftfahrzeugsitz, wobei die Kopfstütze umfasst:
- ein Metallgestell (2) zur Verbindung mit der Rückenlehne des Sitzes,
- ein Gehäuse (3) aus geformtem Kunststoffmaterial zur Absorption von Energie im Falle eines Aufpralls des Kopfes eines Insassen auf die Kopfstütze, wobei das Gehäuse in einer Längsrichtung fest mit dem Gestell verbunden ist,
- ein bewegliches Teil (4), das so an der Vorderseite des Gehäuses angebracht ist, dass es sich in Längsrichtung verschieben kann, wobei das Teil mit einer Vorderwand (5) zur Aufnahme eines Kopfstützenpolsters versehen ist,
- eine Vorrichtung zum Einstellen der Längsposition des Teils in Bezug auf das Gehäuse, um eine Längseinstellung des Polsters zu ermöglichen, wobei die Vorrichtung umfasst:
-- einen Elektromotor (6), der fest am Gehäuse angebracht ist,
-- eine sich in Längsrichtung erstreckende Gewindestange (7), wobei die Stange in Zusammenwirken mit dem Motor drehbar im Gehäuse angebracht ist, um durch Betätigung des Motors in eine oder in die andere Richtung in eine oder in die andere Richtung in Drehung versetzt zu werden,
-- ein Mittel zur Aufnahme (8) der Stange durch ein Gewindeloch, das in dem Mittel vorgesehen ist, wobei das Mittel hinter der Wand mittels eines Abstandselements (9) befestigt ist, welches es in Bezug auf die Wand um einen Abstand, der im Wesentlichen gleich der Länge der Stange ist, nach hinten versetzt,
wobei die Kopfstütze **dadurch gekennzeichnet ist, dass** der Motor seitlich in Bezug auf die Stange angeordnet ist, sodass er sich im Wesentlichen weder vor noch hinter der Stange erstreckt.

2. Kopfstütze nach Anspruch 1, **dadurch gekennzeichnet, dass** das Gestell (2) zwei parallele Schenkel (10) definiert, wobei der Motor (6) und die Stange (7) zwischen den Schenkeln angeordnet sind.

3. Kopfstütze nach einem der Ansprüche 1 oder 2, **dadurch gekennzeichnet, dass** der Motor (6) mit einem ersten Zahnrad (11) versehen ist, das direkt oder indirekt mittels einer Untersetzungsvorrichtung in ein zweites Zahnrad (12) eingreift, das am hinteren Ende der Gewindestange (7) angebracht ist.

4. Kopfstütze nach einem der Ansprüche 1 bis 3, **dadurch gekennzeichnet, dass** das bewegliche Teil (4) zwei Führungsstifte (13) umfasst, die in zwei jeweiligen, fest mit dem Gehäuse (3) verbundenen Hülsen (14) gleiten.

5. Kopfstütze nach einem der Ansprüche 1 bis 4, **dadurch gekennzeichnet, dass** es sich bei dem Element (9) um ein Bauteil handelt, das am beweglichen Teil (4) festgemacht ist.

6. Kopfstütze nach einem der Ansprüche 1 bis 5, **dadurch gekennzeichnet, dass** das Element (9) so beschaffen ist, dass es sich im Falle eines heftigen Aufpralls, der durch den Kopf eines Insassen auf die Wand (5) ausgeübt wird, unter Druck plastisch verformen kann, um eine zusätzliche Energieabsorption zu jener, die das Gehäuse (3) erbringt, zu ermöglichen.

7. Kopfstütze nach einem der Ansprüche 1 bis 6, **dadurch gekennzeichnet, dass** das Element (9) die allgemeine Form eines Kanals zur Aufnahme der Gewindestange (7) aufweist.

8. Kopfstütze nach einem der Ansprüche 2 bis 7, **dadurch gekennzeichnet, dass** das Gehäuse (3) zwei Kanäle (15) zur gleitenden Aufnahme der Schenkel (10) umfasst.

9. Kopfstütze nach einem der Ansprüche 1 bis 8, **dadurch gekennzeichnet, dass** sie weiter eine hintere Schale (16) zum Kaschieren des Gehäuses (3) umfasst.

## Claims

1. Headrest (1) for a motor vehicle seat, said headrest comprising:
- a metal connection framework (2) at the back of said seat,
- a case (3) made of moulded plastic material for absorbing energy in case of an impact of the head of a passenger on said headrest, said case being associated to said framework in a fixed manner in a longitudinal direction,
- a movable portion (4) mounted at the front of said case in such a way as to be able to be displaced longitudinally, said portion being provided with a front wall (5) for receiving a headrest cushion,
- a device for adjusting the longitudinal position of said portion with respect to said case, in such a way as to allow for a longitudinal adjustment of said cushion, said device comprising:
- - an electric motor (6) mounted integrally with said case,
- - a threaded rod (7) extending longitudinally, said rod being rotatably mounted in said case in cooperation with said motor in such a way as to be rotated in one direction or in the other by actuation of said motor in one direction or in the other,
- - a means of receiving (8) said rod through a threaded orifice provided in said means, said means being fixed at the rear of said wall via a spacer member (9) shifting it towards the rear with respect to said wall over a distance substantially equal to the length of said rod,
said headrest being **characterised in that** said motor is disposed laterally with respect to said rod, in such a way as to not substantially extend to the front nor the rear of said rod.

2. Headrest according to claim 1, **characterised in that** the framework (2) defines two parallel branches (10), the motor (6) and the rod (7) being disposed between said branches.

3. Headrest according to one of claims 1 or 2, **characterised in that** the motor (6) is provided with a first gearwheel (11) engaging, directly or indirectly via a gear device, with a second gearwheel (12) mounted at the rear end of the threaded rod (7).

4. Headrest according to any of claims 1 to 3, **characterised in that** the movable portion (4) comprises two guide pins (13) sliding in two respective sheaths (14) integral with the case (3).

5. Headrest according to any of claims 1 to 4, **characterised in that** the member (9) is a part added onto the movable portion (4).

6. Headrest according to any of claims 1 to 5, **characterised in that** the member (9) is arranged to be able to be deformed plastically in compression in case of a violent impact applied by the head of a passenger on the wall (5), in such a way as to allow for an absorption of energy in addition to that provided by the case (3).

7. Headrest according to any of claims 1 to 6, **characterised in that** the member (9) has the general shape of a conduit for receiving the threaded rod (7).

8. Headrest according to any of claims 2 to 7, **characterised in that** the case (3) comprises two conduits (15) for receiving branches (10) in sliding.

9. Headrest according to any of claims 1 to 8, **characterised in that** it further comprises a rear shell (16) for masking the case (3).
